# EUROPEAN PATENT APPLICATION

(11) **EP 4 497 587 A1**
(43) Date of publication of application: **29.01.2025**
(21) Application number: 23187477.7
(22) Date of filing: 25.07.2023
(51) Int. Cl.: B32B 1/08, B32B 5/02, B32B 7/12, B32B 25/02, B32B 25/04, B32B 25/14, B32B 25/16, F16L 11/04

(54) **ABRASION RESISTANT TUBE OR HOSE**

(71) Applicant: Danfoss A/S, 6430 Nordborg (DK)
(72) Inventor: Aptiogullari, Erhan, 59600 Saray, Tekirdag (TR); Aktas, Ali, 59510 Kapakli, Tekirdag (TR); Muco, Recep, 59520 Kapakli, Tekirdag (TR); Sasmaz, Semih, 59510 Kapakli, Tekirdag (TR); Eren, Muslum, 59510 Kapakli, Tekirdag (TR); Can, Recep, 59500 Kapakli, Tekirdag (TR); Orlak, Ayberk, 59510 Kapakli, Tekirdag (TR); Caliskan, Özgür, 59510 Cerkezköy, Tekirdag (TR); Can Karabulut, Burcu, 59500 Corlu, Tekirdag (TR)
(74) Representative: Nestler, Jan Hendrik

(57) **Abstract**

The invention relates to tube or hose (1, 10) comprising a plurality of coaxially arranged sheaths (2, 3, 4, 5, 6, 7, 8, 12, 13) that are bonded together. The multilayered tube or hose (1, 10) comprises at least: a force bearing sheath (2), an abrasion resistant sheath (12), and an adhesion promoting layer (13) that is arranged between the force bearing sheath (2) and the abrasion resistant sheath (12) and that increases the bonding force between said force bearing sheath (2) and said abrasion resistant sheath (12). The adhesion promoting layer (13) comprises a mixture of 55 to 85 parts of acrylonitrile butadiene rubber, 5 to 25 parts of styrene butadiene rubber, 5 to 25 parts of ethylene propylene diene monomer, 75 to 125 parts of carbon black N990, 30 to 90 parts of calcium magnesium carbonate, 5 to 15 parts of zinc oxide, 5 to 25 parts of magnesium-aluminium hydroxycarbonate, 20 to 95 parts of resin package blend, 2 to 10 parts of N-(1.3-dimethylbutyl)-N'-phenyl-p-phenylendiamine, 5 to 15 parts of triallyl cyanurate, and 0.5 to 5 parts of a vulcanizing agent.

## Description

The invention relates to a multilayered tube or hose that comprises a plurality of coaxially arranged sheaths, wherein the coaxially arranged sheaths are bonded together. The multilayered tube or hose comprises at least a force bearing sheath, an abrasion resistant sheath and an adhesion promoting layer that is arranged between the force bearing sheath and the abrasion resistant sheath.

Materials have to be transported between different locations frequently. In the present context, the notion materials may relate to solid particles and to general fluids, including a mixture thereof. "Fluid" can relate to gases, liquids, a mixture of gases and liquids, and also to hypercritical fluids, where a distinction between the liquidous phase and the gaseous phase cannot be made any more. It is further possible that the fluid may contain solid particles, including the case, where solid particles are conveyed using fluids as a transporting agent or even solid particles may be transported as such, in particular using gravity, but which are surrounded by a fluid (for example by air from the surroundings at ambient pressure).

The transport of materials may be required between different devices that are distinct from each other and are only temporarily connected to each other and/or between sub-units within a more complex machinery.

These devices and machines can come from a vast variety of different technical applications. Just to name some examples: they can relate to chemical processes, food processing, combustion engines, air supply, production sites, conveying systems (particularly of solid goods, including granular substances and particles like cement, fertilizers, fly ash, gravel, glass, rock salt) , and so on.

It is easy to understand that solid particles that are moving along the (inner) wall of a tube or hose will exert a significant abrasive effect onto the wall. Such abrasive effects will lead to a removal of material from the mantle of the tube or hose. This may lead to two major possible problems: firstly, the obvious problem that the mantle of the tube or hose will become thinner due to the abrasion. At a certain point the mechanical stability of the tube or hose is not guaranteed any more, and a replacement of the tube or hose has to be effectuated. Secondly, depending on the application, it might also be problematic that material that is abraded from the mantle of the tube or hose will end up in the material that is transported, causing a certain contamination of this material.

The obvious approach is of course to use materials that show a very high abrasive resistance with respect to the material to be transported inside the tube or hose. An example for this are standard metal tubes. However, it is easily understandable that metal tubes do come along with a certain weight and a certain cost factor that may be problematic. Furthermore, the flexibility of metal tubes is very limited, consequently reducing the field of applicability of this approach.

In the meantime, abrasive resistance plastic material have also been developed. Such plastic materials are usually lighter as compared to metal, and may be more cost-effective as well. An example for such plastic material is thermoplastic polyurethane (TPU). However, if a tube is produced essentially only from such plastic material, it is typically very stiff. Therefore, the use thereof as flexible hoses is not possible, or at least severely limited.

To be able to provide flexible hoses that nevertheless have an increased resistance against abrasion, it has already been proposed to use a multilayered design, where an inner sheath is provided for abrasion resistance, while an outer sheath is provided for coping with the forces that are occurring (force bearing sheath). Due to this bifold approach, the inner, abrasion resistant sheath may be designed in a way to "concentrate" on the purpose of abrasion resistance, while the resiliency against any occurring forces plays only a minor role. It is easily understandable that this broadens the range of possible materials that may be used. The same applies mutatis mutandis to the outer sheath that is provided for dealing with the forces occurring.

This approach has been undeniably successful. Nevertheless, it comes at a certain cost. This is because the two sheaths that are made of a different material have to be bonded together. This bond has to be sufficiently flexible so as to not foil the flexibility of the resulting multilayered hose. Nevertheless, the bond has to have a sufficiently high strength over time, so as to avoid delamination of the different sheaths, which would eventually require an early replacement of the respective hose.

To increase the bonding strength and lifetime of the connection between the abrasion resistant sheath and the force bearing sheath, it has already been proposed to use a special intermediary layer like a glue for bonding the two sheaths together.

While this approach has led to undeniable improvements, there is still room for improvement, in particular with respect to cost efficiency, longevity and strength of the connection. In particular, there is still a desire to use cost efficient and/or very functional materials for the force bearing sheath and/or the abrasion resistant sheath. As another consequence, the selection of the materials for these sheaths has an influence on possible materials remaining for the adhesion promoting layer. Functionality in the present context may relate to high abrasion resistance and high stability against forces.

It is therefore the object of the present disclosure to suggest a multilayered tube or hose that comprises a plurality of coaxially arranged sheaths, wherein the coaxially arranged sheaths are bonded together, wherein the multilayered tube or hose comprises at least a force bearing sheath, an abrasion resistant sheath and an adhesion promoting layer that is arranged between the force bearing sheath and the abrasion resistant sheath and that increases the bonding force between said force bearing sheath and said abrasion resistant sheath and that is improved over multilayered tubes or hoses that are known in the prior art.

A multilayered tube or hose according to claim 1 solves this object.

A multilayered tube or hose is proposed that comprises a plurality of coaxially arranged sheaths, wherein the coaxially arranged sheaths are bonded together. The multilayered tube or hose comprises at least a force bearing sheath; an abrasion resistant sheath; and an adhesion promoting layer that is arranged between the force bearing sheath and the abrasion resistant sheath and that increases the bonding force between said force bearing sheath and said abrasion resistant sheath.
The adhesion promoting layer comprises a mixture of:
55 to 85 parts of acrylonitrile butadiene rubber,
5 to 25 parts of styrene butadiene rubber,
5 to 25 parts of ethylene propylene diene monomer
75 to 125 parts of carbon black N990,
30 to 90 parts of calcium magnesium carbonate,
5 to 15 parts of zinc oxide,
5 to 25 parts of magnesium-aluminium hydroxycarbonate,
20 to 95 parts of resin package blend,
2 to 10 parts of N-(1.3-dimethylbutyl)-N'-phenyl-p-phenylendiamine,
5 to 15 parts of triallyl cyanurate, and
0.5 to 5 parts of a vulcanizing agent.

When talking about "parts" in the present context, in particular parts by weight, parts by number or parts by volume may be considered. "Parts by weight" may be understood in a way that one part is equal to one mass unit (where the mass unit may be chosen according to the current needs and may be, for example, 1 g, 1 kg, 1 ton, or the like). Likewise, "parts by volume" may be understood in a way that one part is equal to 1 volume unit (where the volume unit may be chosen according to the current needs and may be, for example, 1 L, 1 m³ or the like). "Parts by number" may relate to a certain number of molecules (as an example, one part may be equivalent to 1 mol, or the like). It is to be understood that when adding up the parts, one does usually not end up with 100 parts, in particular when using (some of) the currently disclosed prescriptions. Therefore, "parts" in the present context is usually different from a percentage. However, it is easily possible to calculate the percentage. For this, all numbers of parts for the various ingredients have to be added together, therefore yielding a "number of parts in total". Then, one can divide the number of parts of the respective ingredient by the "parts in total number" to yield a percentage number. Depending on the "type of parts" chosen, the percentage number will be a respective percentage number. Just to name an example: if parts by weight are chosen, after performing the mentioned calculation one would end up with weight-percent (weight-%).

The material mixture of the adhesion promoting layer may be understood to comprise the referenced materials. However, it may also be understood to consist (essentially/only) of the referenced materials. Comprise may be understood in a way that additional materials may be added. Those additional materials may be essentially materials that have essentially no noticeable effect on the resulting adhesion promoting layer, in particular with respect to the adhesion promoting effect. As an example, these may be filler agents. Comprise, and in particular "essentially consist of", may be also understood in a way that (minuscule) amounts of additional materials may be contained. Those (minuscule) amounts may be residual substances, where the removal of those residual substances may be too time-consuming or too costly to perform. An extreme case for this would be impurities (where in case of impurities even the wording of "consist only" may be used, even from the perspective of a person skilled in the art in the present field).

The aforementioned numbers may be chosen from a narrower interval for some or each of the aforementioned substances, as well. In particular, the mentioned range of 55 to 85 parts of acrylonitrile butadiene rubber may preferably be narrowed down to 60 to 80 parts of acrylonitrile butadiene rubber, more preferably 65 to 75 parts of acrylonitrile butadiene rubber. It is to be noted that it may be possible to combine upper and lower limits from differently wide intervals, meaning for example, that an interval of 55 to 80 parts or 60 to 75 parts of acrylonitrile butadiene rubber shall be considered to be explicitly disclosed as well. This statement may apply to all series of differently sized intervals mentioned in the present disclosure. For completeness, it should be mentioned that acrylonitrile butadiene rubber is frequently referred to by its abbreviation NBR.

Further, 5 to 25 parts of styrene butadiene rubber may preferably be narrowed down to 10 to 20 parts of styrene butadiene rubber. For completeness, it should be mentioned that styrene butadiene rubber is frequently referred to by its abbreviation SBR.

The aforementioned range of 5 to 25 parts of ethylene propylene diene monomer may preferably narrowed down to 10 to 20 parts of ethylene propylene diene monomer, more preferably 12 to 15 parts of ethylene propylene diene monomer. For completeness, it should be mentioned that styrene butadiene rubber is frequently referred to by its abbreviation EPDM.

It is to be noted that acrylonitrile butadiene rubber, styrene butadiene rubber and/or ethylene propylene diene monomer may be considered to constitute the elastomeric constituents (elastomer) of the above referenced mixture. However, it may or may not be possible to add additional elastomeric constituents and/or to consider other materials from the above referenced mixture to be elastomeric constituents.

75 to 125 parts of carbon black N990 may preferably be narrowed down to 80 to 120 parts of carbon black N990, more preferably to 85 to 115 parts of carbon black N990, even more preferably to 90 to 110 parts of carbon black N990, yet more preferably to 95 to 105 parts of carbon black N990, most preferably to 100 parts of carbon black N990. It is to be noted that carbon black is to be considered to be according to the ASTM definition at the date of filing of the present application (ASTM=American Society for Testing and Materials). For follow-up filings, claiming an earlier priority, the priority date of the respective filing shall be considered as the effective date, of course.

30 to 90 parts of calcium magnesium carbonate may preferably be narrowed down to 35 to 80 parts of calcium magnesium carbonate, more preferably to 40 to 60 parts of calcium magnesium carbonate, even more preferably to 42 to 50 parts of calcium magnesium carbonate, most preferably to 45 parts of calcium magnesium carbonate.

5 to 15 parts of zinc oxide may preferably be narrowed down to 7 to 13 parts of zinc oxide, more preferably to 9 to 11 parts of zinc oxide, most preferably to 10 parts of zinc oxide.

5 to 25 parts of magnesium-aluminium hydroxycarbonate may preferably narrowed down to 7 to 20 parts of magnesium-aluminium hydroxycarbonate, even more preferably to 9 to 15 parts of magnesium-aluminium hydroxycarbonate, most preferably to 10 parts of magnesium-aluminium hydroxycarbonate. For completeness, it should be mentioned that magnesium-aluminium hydroxycarbonate is frequently referred to by its shorthand name hydrotalcite.

20 to 95 parts of resin package blend may preferably be narrowed down to 30 to 85 parts of resin package blend, more preferably to 35 to 90 parts of resin package blend, even more preferably to 40 to 70 parts of resin package blend, yet more preferably to 42 to 50 parts of resin package blend, most preferably to 46 parts of resin package blend.

2 to 10 parts of N-(1.3-dimethylbutyl)-N'-phenyl-p-phenylendiamine may preferably be narrowed down to 2.5 to 5 parts of N-(1.3-dimethylbutyl)-N'-phenyl-p-phenylendiamine, most preferably to 3 parts of N-(1.3-dimethylbutyl)-N'-phenyl-p-phenylendiamine.

5 to 15 parts of triallyl cyanurate may preferably be narrowed down to 2 to 13 parts of triallyl cyanurate, more preferably 3 to 10 parts of triallyl cyanurate, most preferably 4 parts of triallyl cyanurate. For completeness, it should be mentioned that triallyl cyanurate is frequently referred to by its abbreviation TAC-50.

Furthermore, 0.5 to 5 parts of a vulcanizing agent may preferably be narrowed down to 1 to 3 parts of a vulcanizing agent, more preferably to 1.5 to 2 parts of a vulcanizing agent.

The inventors figured out that the described mixtures will result in a particular strong and durable bond between the abrasion resistant sheath and the adhesion promoting layer, and between the adhesion promoting layer and the force bearing sheath of the multilayered tube or hose. This, in turn, will result in a particularly strong and durable bond between the abrasion resistant sheath and the force bearing sheath.

As usual, a tube or hose is to be considered as an elongated device with a hollow interior (inner channel) for guiding fluids (gases, liquids, mixture of gases and liquids, supercritical fluids where no distinction between gas and liquid can be made any more) and/or for transporting material, in particular particulate material (like grains, gravel, granulates, cement, fertilizers, fly ash, glass, carbon residues of steel mills, rock salt and the like). In case that mainly a fluid is transported, it is possible that the fluids may contain a certain amount of solid particles (essentially conveying a smoke and/or a suspension). If mainly solid particles are transported, they may be conveyed together with a fluid stream (where, for example, the movement of the solid particles is induced or supported by the fluid), or where simply ambient fluid is around in the tube or hose (so that no vacuum has to be realised; or where fluid in form of a protective atmosphere is present). As usual, the tube or hose comprises at least one inner channel (hollow interior), possibly even a plurality of inner channels. Regularly, the tube or hose has an essentially circular cross-section, in particular due to pressure and mechanical stability considerations. However, different cross sections are possible as well, like elliptical or polygonal shapes (possibly with rounded corners). Typically, one talks about a tube if the flexibility of the device is comparatively low, while one talks about a hose, if the device has a comparatively high flexibility. The different layers of the multilayered tube or hose are usually arranged around the longitudinal axis of the multilayered tube or hose in a coaxial way, i.e. following each other in a radial direction. Usually, the layers are essentially rotationally symmetric (or possibly showing a n-count symmetry). This does not rule out the possibility that even in a circumferential direction variations in thickness or even gaps in one or a plurality of sheaths may be present. A particular example for such gaps is a reinforcing fabrics, where due to the construction of the fabrics in form of an arrangement of individual filaments of finite size that show a certain spacing between each other, no rotational symmetry is present in the mathematical sense. However, even then typically a "so to say" rotational symmetry is usually present.

The different sheaths and layers, as mentioned before (and in the following) do usually differ with respect to the material composition and/or thickness. This usually results in different mechanical properties like different strength and so on. It is to be noted that a force bearing sheath certainly provides a certain abrasion resiliency, at least to a certain extent. Therefore, in a certain sense the force bearing sheath will usually act as some kind of a abrasion resistant sheath as well. Nevertheless, the main purpose of the force bearing sheath is usually to sustain the mechanical integrity of the tube or hose. Therefore, the material, the thickness and other design considerations are chosen in a way that the main purpose of the force bearing sheath is realised. Similarly, an abrasion resistant sheath will typically contribute to the mechanical strength of the respective tube or hose to a certain extent. Nevertheless, the main purpose of the abrasion resistant sheath lies in the reduction of the abrasive effect induced by the transported material, and hence in a reduction of an abrasion of the wall of the multilayered tube or hose.

The adhesion promoting layer may show various thicknesses, so that the adhesion promoting layer may possibly also be seen as an adhesion promoting sheath, in particular in case a more or less significant thickness of the adhesion promoting layer is present. The main purpose of the adhesion promoting layer is to secure a strong and durable connection between the neighbouring abrasion resistant sheath and force bearing sheath. In particular, the risk of delamination of the abrasion resistant sheath and the force bearing sheath should be reduced and in particular postponed (i.e. resulting in a long lifetime of the resulting multilayered tube or hose). As previously noted, the adhesion promoting layer may show certain force bearing properties and/or a certain abrasion resistance as well. Nevertheless, its main purpose is increasing the adhesion forces and/or increasing the lifetime of the respective bond. It is to be noted that the material of the adhesion promoting layer may even intrude into the neighbouring surface of the neighbouring sheath, in particular of the neighbouring abrasion resistant sheath and/or the neighbouring force bearing sheath to a certain extent. This may be in form of spikes or dendrites of the material of the adhesion promoting layer that extend into cavities of the neighbouring sheath, in particular of the neighbouring abrasion resistant sheath and/or the neighbouring force bearing sheath (or vice versa). This typically results in increased bonding forces. Also, some kind of material mingling may occur between the material of the adhesion promoting layer and the material of the neighbouring layers/sheaths additionally or alternatively. It is even possible that the adhesion promoting layer results in a partial intrusion/mingling of the adjacent sheaths (in particular force bearing sheath and abrasion resistant sheath).

Concerning the aforementioned acrylonitrile butadiene rubber it is preferred if it comprises 18 to 28 weight-% acrylonitrile and/or in that the styrene butadiene rubber comprises 10 to 25 weight-% of styrene, wherein the butadiene fraction is preferably composed of 60 to 70 weight-% trans-1,4 configuration, 15 to 20 weight-% cis-1,4 configuration, balancing 1,2 configuration, in particular per 100 parts of the elastomer comprising acrylonitrile butadiene rubber, styrene butadiene rubber and/or (possibly) ethylene propylene diene monomer.

Similar to the "basic" mixture of the afore described adhesion promoting layer, the respective interval ranges may be chosen narrower. In particular, the 18 to 28 weight-% of acrylonitrile in the acrylonitrile butadiene rubber may preferably be narrowed down to 20 to 27 weight-% acrylonitrile, more preferred to 22 to 26 weight-% of acrylonitrile, even more preferred to 24 to 25 weight-% of acrylonitrile. Additionally or alternatively, the 10 to 25 weight-% of styrene in the styrene butadiene rubber may preferably be narrowed down to 15 to 20 weight-% styrene, more preferred to 17 to 18 weight-% of styrene. Even further, the butadiene fraction may more preferably be composed of 62 to 68 weight-% trans-1,4 configuration and/or 17 to 18 weight-% cis-1,4 configuration, balancing 1,2 configuration, in particular per 100 parts of the elastomer comprising acrylonitrile butadiene rubber, styrene butadiene rubber and/or ethylene propylene diene monomer.

Furthermore, it is suggested that the ethylene propylene diene monomer may comprise 44 to 85 weight-% of ethylene and 2.8 to 11 weight-% ethyldiene norbornene, in particular per 100 parts of the elastomer comprising acrylonitrile butadiene rubber, styrene butadiene rubber and/or (possibly) ethylene propylene diene monomer. This may be narrowed down to 60 to 70 weight-% of ethylene and/or 5 to 8 weight-% ethyldiene norbornene.

According to a preferred embodiment, the resin package blend comprises 5 to 25 parts hexa (methoxymethyl) melamine liquid resin; 5 to 15 parts of self-curing modified phenolic resin ingredient; 5 to 25 parts of aliphatic-aromatic soft resin; 5 to 25 parts of benzene-1,3-diol bonding agent; 5 to 25 parts of aromatic hydrocarbon resin ingredient, in particular per 100 parts of elastomer comprising acrylonitrile butadiene rubber, styrene butadiene rubber and/or (possibly) ethylene propylene diene monomer. More preferably, the raisin package blend comprises 10 to 20 parts hexa (methoxymethyl) melamine liquid resin and/or 7 to 13 parts of self-curing modified phenolic resin ingredient and/or 10 to 20 parts of aliphatic-aromatic soft resin and/or 10 to 20 parts of benzene-1,3-diol bonding agent and/or 10 to 20 parts of aromatic hydrocarbon resin ingredient, in particular per 100 parts of elastomer comprising acrylonitrile butadiene rubber, styrene butadiene rubber and/or ethylene propylene diene monomer. The "and/or" relation in the previous list may be understood in a way that a selective combination with the earlier list as possible, so that, as an example, 5 to 25 parts hexa (methoxymethyl) melamine liquid resin (range from the "broader list") may be combined with 7 to 13 parts of self-curing modified phenolic resin ingredient (range from the "narrower list") and so on. This, however, does not exclude the already mentioned possible combination of the limiting numbers of differently sized ranges, for example of 5 to 20 parts hexa (methoxymethyl) melamine liquid resin (just to name an example). Only for completeness, it is pointed out that benzene-1 ,3-diol is also known under the name resorcinol.

While a broad range of vulcanizing agents as they are known in the state of the art may be envisaged (possibly even a mixture of various vulcanizing agents), it is suggested that the vulcanizing agent comprises dicumyl peroxide (where dicumyl peroxide may be the essentially only vulcanising agent, but where possibly additional vulcanizing agents may be used as well). First experiments have shown that when using at least in part dicumyl peroxide, a particular good cure of the remaining ingredients can be realised.

According to another embodiment, it is suggested that said abrasion resistant sheath comprises a thermoplastic polyurethane material. In first experiments these materials showed a very good resistance against abrasion effects, even if comparatively large particles were transported in the respective tube or hose.

Preferably, the multilayered tube or hose is designed in a way that the abrasion resistant sheath forms of the innermost layer of the multilayered tube or hose. Here, the largest abrasive effects do usually occur. This does not rule out the possibility to introduce a coating layer onto the abrasion resistant sheath towards the inner channel, for example some kind of a protective layer for shipment or storage before the tube or hose is actually used.

Preferably, said at least one force bearing sheath comprises acrylonitrile butadiene rubber, styrene butadiene rubber and/or ethylene propylene diene monomer.

Another preferred embodiment of a multilayered tube or hose may be realised if the multilayered tube or hose comprises at least a low flammable layer, in particular a low flammable sheath or coating, said low flammable layer preferably comprising (or (essentially) consisting of) nitrile rubber and/or poly vinyl chloride. This way, safety issues can be addressed, in particular when the tube or hose is used used in connection with flammable fluids or environments. An example for this may be motor vehicles (for example cars, buses, trucks, ships, railroads, trams or aeroplanes) or stationary combustion engine installations (which can be found in power plants or in connection with emergency electric generators). Here (and not only here), there is an increased risk of flames occurring. Therefore, low flammability of the respective multilayered tube or hose may prove to increase safety, or may even be required in certain jurisdictions. Only as a side remark, materials being different from nitrile rubber and/or poly vinyl chloride may be used alternatively or additionally.

A preferred embodiment of a multilayered tube or hose may be realised, if the multilayered tube or hose comprises at least a strength reinforcing means, in particular a strength reinforcing fabrics, more preferably a crimped or non-crimped fabrics. This way, the mechanical strength of the resulting multilayered tube or hose may typically be increased significantly without unduly increasing size, cost and/or weight of the resulting multilayered tube or hose. As threads for fabrics, in particular polyester textile yarn, carbon fibres, aramide fibers, nylon filaments or the like may be advantageously used.

Even further, it is suggested that the multilayered tube or hose comprises at least a diffusion reducing sheath, that is in particular embedded between two different sheaths, in particular between two force bearing sheaths. Using a diffusion reducing sheath, a diffusion of materials (or parts thereof) that are transported by the multilayered tube or hose to the outside can be advantageously avoided. Therefore toxic, flammable, explosive or other dangerous substances that should not permeate through the wall of the tube or housing can be effectively contained within the tube or hose. The design may also prove to be advantageous in situations, where ambient substances should be hindered to enter a tube or hose. An example for this is food processing or conveying of highly sensitive substances. Here, a permeability of the tube or hose with respect to (for example) oxygen may be problematic, since oxygen may lead to a deterioration or an early spoiling of food to be processed. Again, this can be avoided by using the presently proposed diffusion reducing sheath. By using a second diffusion reducing sheath, the mechanical strength of the resulting multilayered tube or hose can be increased even further. Furthermore, using this design it is possible to prevent a direct contact of the diffusion reducing sheath with the abrasion resistant sheath. It is to be noted that the main function of the diffusion reducing sheath is the reduction of the diffusion, and therefore usually the diffusion reducing sheath is comparatively prone to wear or damage when being exposed to external influences. Therefore, using the presently proposed preferred design, the lifetime of the tube or hose may be increased, usually even considerably.

Preferably, the multilayered tube or hose comprises at least a second type of adhesion promoting sheath between said diffusion reducing sheath and the at least one neighbouring sheath, preferably the at least one neighbouring force bearing sheath. Similar to the afore described (first) adhesion promoting sheath between the at least one force bearing sheath and the abrasion resistant sheath, the bond between the diffusion reducing sheath and the adjacent (force bearing) sheath can be made stronger and/or can show an increased lifetime, in particular an increased time before delineation occurs.

Preferably, the second type of adhesion promoting sheath comprises a mixture of:
65 to 85 parts of acrylonitrile butadiene rubber,
15 to 35 parts of styrene butadiene rubber,
75 to 125 parts of carbon black N990,
30 to 100 parts of calcium magnesium carbonate,
5 to 15 parts of zinc oxide,
5 to 20 parts of magnesium-aluminium hydroxycarbonate,
25 to 125 parts of resin package blend,
2 to 10 parts of N-(1.3-dimethylbutyl)-N'-phenyl-p-phenylendiamine,
5 to 15 parts of triallyl cyanurate, and
0.5 to 5 parts of a vulcanizing agent.

This mixture has proven to be particularly well suited for the present purpose of bonding the diffusion reducing sheath and the force bearing sheath together.

The material content as defined by the indicated ranges may be narrowed according to the previous suggestion as well.

However, with respect to acrylonitrile butadiene rubber, the mentioned range of 65 to 85 parts of acrylonitrile butadiene rubber may preferably be narrowed down to 70 to 80 parts of acrylonitrile butadiene rubber, and even more preferred down to 72 to 78 parts of acrylonitrile butadiene rubber, most preferably to 75 parts of acrylonitrile butadiene rubber.

Consequently, 15 to 35 parts of styrene butadiene rubber may preferably be narrowed down to 20 to 30 parts of styrene butadiene rubber, more preferably 23 to 33 parts of styrene butadiene rubber, most preferably 25 to 30 parts of styrene butadiene rubber.

Even further, in the present context, 30 to 100 parts of calcium magnesium carbonate may preferably be narrowed down to 35 to 80 parts of calcium magnesium carbonate, more preferably to 40 to 60 parts of calcium magnesium carbonate, even more preferably to 42 to 50 parts of calcium magnesium carbonate, most preferably to 45 parts of calcium magnesium carbonate.

5 to 20 parts of magnesium-aluminium hydroxycarbonate may preferably narrowed down to 7 to 15 parts of magnesium-aluminium hydroxycarbonate, even more preferably to 9 to 12 parts of magnesium-aluminium hydroxycarbonate, most preferably to 10 parts of magnesium-aluminium hydroxycarbonate. For completeness, it should be mentioned that magnesium-aluminium hydroxycarbonate is frequently referred to by its shorthand name hydrotalcite.

25 to 125 parts of resin package blend, may preferably be narrowed down to 30 to 110 parts of resin package blend, more preferably to 35 to 90 parts of resin package blend, even more preferably to 40 to 70 parts of resin package blend, yet more preferably to 42 to 50 parts of resin package blend, most preferably to 46 parts of resin package blend.

With respect to the possible compositions of acrylonitrile butadiene rubber, styrene butadiene rubber, the resin package blend and/or the vulcanizing agent, reference is made to the previous description.

Only for completeness it should be mentioned that - while it is preferred that at least one force bearing sheath is arranged between the diffusion reducing sheath and the abrasion resistant sheath, it is also possible that a direct/adjacent placement and bonding of the diffusion reducing sheath and the abrasion resistance sheath is possible. An intermediary adhesion promoting layer between the diffusion reducing sheath and the abrasion resistance sheath may or may not be present.

Further advantages, features, and objects of the invention will be apparent from the following detailed description of the invention in conjunction with the associated drawings, wherein the drawings show:
- Fig. 1:: a schematic perspective view on a cut-open part of a first possible embodiment of a multilayered hose comprising an abrasion resistant sheath, a force bearing sheath and an adhesion promoting layer according to the present disclosure;
- Fig. 2:: a schematic cross section through a second possible embodiment of a multilayered hose, comprising in particular an abrasion resistant sheath and a diffusion reducing sheath.

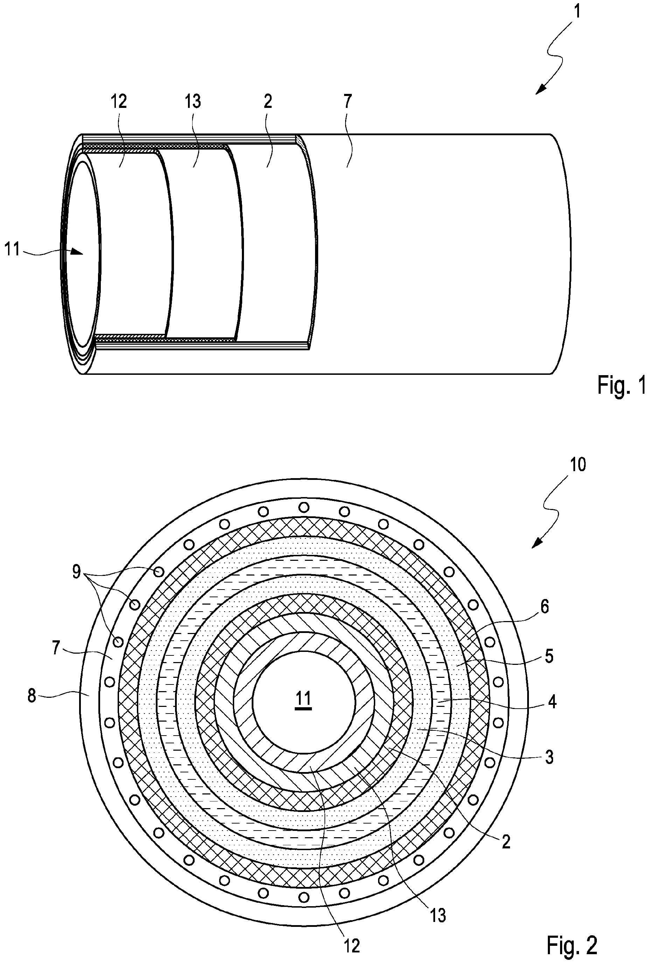

Fig. 1 shows a first possible embodiment of a multilayered hose 1 according to the present disclosure. The multilayered hose 1 is presently designed as a hose for conveying solid material through a fluid channel 11, in particular in form of particles (grain, granular particles, cement, fertilizers, fly ash, rock salt and so on). Therefore, the multilayered hose 1 is particularly prone to abrasion effects. Hence, an abrasion resistance sheath 12 is provided to reduce this wear. Presently, the abrasion resistance sheath 12 is essentially composed of a thermoplastic polyurethane material. Such a material is known in the state-of-the-art to have very good abrasion resistance properties that are combined with various other advantages, like flexibility, low cost and the like.

Since the presently shown multilayered hose 1 is designed to accept large forces, it is not only provided with a force bearing sheath 2, but also with an additional strength reinforcing sheath 7. Therefore, the first embodiment of a multilayered hose 1 shows some additional layers and/or sheaths over the so to say "minimum design" according to the present disclosure.

As can be seen in Fig. 1, the multilayered hose 1 comprises a force bearing sheath 2 and a strength reinforcing sheath 7.

The force bearing sheath 2 is made of standard hose rubber material, as it is known in the state of the art. Presently, the force bearing sheath 2 is made of NBR rubber, SBR rubber, or a mixture thereof (NBR = nitrile butadiene rubber; SBR = styrene butadiene rubber). However, different material compositions may be envisaged as well, at least in principle.

To improve the mechanical resistance of the multilayered hose 1, an additional strength reinforcing sheath 7 is provided. Presently, the strength reinforcing sheath 7 comprises a mesh of textile yarns, wherein presently the yarn is made of a polyester textile yarn. The strength reinforcing sheath 7 is embedded in an elastomeric matrix, wherein for the matrix of the strength reinforcing sheath 7 the same and/or a different material composition as compared to the bearing sheath 2 can be chosen. In particular, the elastomeric matrix may comprise acrylonitrile butadiene rubber, styrene butadiene rubber and/or ethylene propylene diene monomer.

For providing a sufficient stability of the resulting multilayered hose 1, and in light of the different materials / material compositions of the force bearing sheath 2 and the abrasion resistant sheath 12, an adhesion promoting layer 13 is presently provided between the force bearing sheath 2 and the abrasion resistant sheath 12 The material that may be chosen for this adhesion promoting layer 13 has to be a compromise between strong bonding, long lifetime (in particular with respect to delamination of the sheaths 2, 13 that are bonded together), practicality with respect to manufacture, cost for the material and so on.

Presently, a material composition is proposed for adhesion promoting layer 13, where the layer comprises a material mix, comprising: 55 to 85 parts of acrylonitrile butadiene rubber; 5 to 25 parts of styrene butadiene rubber; 5 to 25 parts of ethylene propylene diene monomer; 75 to 125 parts of carbon black N990; 30 to 90 parts of calcium magnesium carbonate; 5 to 15 parts of zinc oxide; 5 to 25 parts of magnesium-aluminium hydroxycarbonate; 20 to 95 parts of resin package blend; 2 to 10 parts of N-(1.3-dimethylbutyl)-N'-phenyl-p-phenylendiamine, 5 to 15 parts of triallyl cyanurate; and 0.5 to 5 parts of a vulcanizing agent.

In Table 1 experimental results with two explicit examples of a material mix according to the present disclosure are shown, together with measured parameters of certain physical properties. It is obvious from Table 1 that the use of the presently proposed adhesion promoting layer 13 shows an improved behaviour of the resulting multilayered hose 1.

**TABLE 1**

| **Ingredients** | **Per hundred Parts by Weight of Elastomer (phr)** | | |
|---|---|---|---|
| | **Example 1** | **Example 2** | **Example 3** |
| acrylonitrile butadiene rubber (NBR) - 18 to 28% acrylonitrile (ACN) | 80 | 70 | 60 |
| styrene butadiene rubber (SBR) - 10 to 25% styrene | 10 | 15 | 20 |
| ethylene propylene diene monomer (EPDM) - | 10 | 15 | 20 |
| carbon black, N990 grade | 100 | 100 | 100 |
| calcium magnesium carbonate | 45 | 45 | 45 |
| zinc oxide | 10 | 10 | 10 |
| magnesium-aluminum hydroxycarbonate (hydrotalcite) | 10 | 10 | 10 |
| resin package including hexa (methoxymethyl) melamine liquid resin, self-curing modified phenolic resin, aliphatic-aromatic soft resin, aromatic hydrocarbon resin and benzene-1,3-diol | 46 | 46 | 46 |
| N-(1.3-dimethylbutyl)-N'-phenyl-p-phenylendiamine | 3 | 3 | 3 |
| triallyl cyanurate (TAC-50) | 4 | 4 | 4 |
| dicumyl peroxide (DCP) | 1,5 | 1,5 | 1,5 |

| **Physical Properties** | | | |
|---|---|---|---|
| hardness (ShA) | 65 | 67 | 66 |
| tensile strength (MPa) | 8.3 | 8.5 | 8.4 |
| elongation at break (%) | 396 | 383 | 388 |

Only for completeness it is mentioned that the multilayered hose 1 shows an elongated design with an axial, lengthwise arranged central axis. The different sheaths and layers of the wall of the multilayered hose 1 are arranged in a coaxial way and are placed neighbouring each other (and are bonded together) in the following order (from the inside to the outside, as seen in a radial direction): abrasion resistant sheath 12, adhesion promoting layer 13, force bearing sheath 2, strength reinforcing sheath 7.

Fig. 2 shows a second possible embodiment of a multilayered hose 10 in a schematic cross section. It is to be noted that the thicknesses of the various sheaths and layers are exaggerated with respect to the diameter of the inner fluid conduit 11. Furthermore, the thicknesses of the various sheaths and layers will usually vary amongst the various sheaths and layers as well.

The presently shown second embodiment of a multilayered hose 10 is somewhat similar to the first embodiment of a multilayered hose 1, as shown in Fig. 1. Namely, some parts of the mantle of the hose according to the second embodiment of a multilayered hose 10 are equivalent to the design of the first embodiment of the multilayered hose 1 according to Fig. 1. For brevity, reference is made to the previous description. Only for completeness, it is mentioned that in the cross-section of Fig. 2, the various threads of the polyester textile yarn 9 can be seen inside of strength reinforcing sheath 7.

Furthermore, for additional fire resistance of the multilayered hose 10, a low flammable sheath 8 is provided as an outer layer, coating or sheath. Presently, the low flammable sheath 8 comprises a mixture of nitrile rubber and poly vinyl chloride. This material mixture is known in the prior art to be comparatively flame resistant.

Thanks to the low diffusion of fuel through the multilayered hose 10 and the decreased flammability thanks to the low flammable sheath 8, the presently proposed multilayered hose 10 fulfils in particular new marine fuel hose standards SAE J 1527 class A1-15 and ISO 7840, as in force on 1 January 2023, respectively. It is obvious that this is an advantage.

Furthermore, a diffusion reducing sheath 4 (diffusion barrier) is present. For the diffusion reducing sheath 4, presently a polyamide 6 material has been chosen. This material shows an advantageous diffusion resistance against passage of usual fuels.

The diffusion reducing sheath 4 is arranged between two force bearing sheaths 2, 6 for stability and design reasons. In particular, force bearing sheath 2 may be viewed as an additional mediating sheath between the two adhesion promoting layers 3, 13 that are preferably made of a different composition. Furthermore, by providing two force bearing sheaths 2, 6 the mechanical stability of the multilayered hose 10 will be higher.

To provide a good bonding between diffusion reducing sheath 4 and the two adjacent force bearing sheaths 2, 6 adapted adhesion promoting layers 3, 5 of different composition (as compared to adhesion promoting layer 13) are provided. It is to be noted that usually the composition of the two types of adhesion promoting layers 2, 5 and 13 have to be different since different materials (sheaths) have to be bonded together by them.

Presently, a material composition is used for the second type of adhesion promoting layers 2, 6, comprising: 65 to 85 parts of acrylonitrile butadiene rubber, 15 to 35 parts of styrene butadiene rubber, 75 to 125 parts of carbon black N990, 30 to 100 parts of calcium magnesium carbonate, 5 to 15 parts of zinc oxide, 5 to 20 parts of magnesium-aluminium hydroxycarbonate, 25 to 125 parts of resin package blend, 2 to 10 parts of N-(1.3-Dimethylbutyl)-N'-phenyl-p-phenylendiamine, 5 to 15 parts of triallyl cyanurate, and 0.5 to 5 parts of a vulcanizing agent.

In detail, in Table 2, three different material compositions are explicitly shown for which experiments have been performed. Certain measured parameters are indicated in Table 2 as well.

**TABLE 2**

| **Ingredients** | **Per hundred Parts by Weight of Elastomer (phr)** | |
|---|---|---|
| | **Example 1** | **Example 2** |
| acrylonitrile butadiene rubber (NBR) - 18 to 28% acrylonitrile (ACN) | 80 | 70 |
| styrene butadiene rubber (SBR) - 10 to 25% styrene | 20 | 30 |
| carbon black, N990 grade | 100 | 100 |
| calcium magnesium carbonate | 45 | 45 |
| zinc oxide | 10 | 10 |
| magnesium-aluminum hydroxycarbonate (hydrotalcite) | 10 | 10 |
| resin package including hexa (methoxymethyl) melamine liquid resin , self-curing modified phenolic resin, aliphatic-aromatic soft resin, aromatic hydrocarbon resin and benzene-1,3-diol | 46 | 46 |
| N-(1.3-dimethylbutyl)-N'-phenyl-p-phenylendiamine | 3 | 3 |
| triallyl cyanurate (TAC-50) | 4 | 4 |
| dicumyl peroxide (DCP) | 1,5 | 1,5 |
| **Physical Properties** | | |
| hardness (ShA) | 61 | 59 |
| tensile strength (MPa) | 80 | 76 |
| elongation at break (%) | 435 | 444 |

Only for completeness it is mentioned that the multilayered hose 10 according to the second embodiment shows an elongated design with an axial, lengthwise arranged central axis. The different sheaths and layers of the wall of the multilayered hose 10 are arranged in a coaxial way and are placed neighbouring each other (and are bonded together) in the following order (from the inside to the outside, as seen in a radial direction): abrasion resistant sheath 12, additional adhesion promoting layer of different composition 13, first force bearing sheath 2, first adhesion promoting layer 3, diffusion reducing sheath 4, second adhesion promoting layer 5, second force bearing sheath 6, strength reinforcing sheath 7, and low flammable sheath 8.

Additional information can be taken from the parallely filed patent application by the same applicant, filed with applicant's reference number DAN2205EP on the same date. The disclosure of this application is to be considered to be fully contained in the present application.

It is to be noted that a single one or a plurality of the features of the presently disclosed detailed embodiment may be used in combination with the generic description of the present disclosure.

## Claims

1. Multilayered tube or hose (1, 10) comprising a plurality of coaxially arranged sheaths (2, 3, 4, 5, 6, 7, 8, 12, 13), wherein the coaxially arranged sheaths (2, 3, 4, 5, 6, 7, 8, 12, 13) are bonded together, the multilayered tube or hose (1, 10) comprising at least:
a force bearing sheath (2),
an abrasion resistant sheath (12), and
an adhesion promoting layer (13) that is arranged between the force bearing sheath (2) and the abrasion resistant sheath (12) and that increases the bonding force between said force bearing sheath (2) and said abrasion resistant sheath (12),
**characterised in that** said adhesion promoting layer (13) comprises a mixture of:
55 to 85 parts of acrylonitrile butadiene rubber,
5 to 25 parts of styrene butadiene rubber,
5 to 25 parts of ethylene propylene diene monomer
75 to 125 parts of carbon black N990,
30 to 90 parts of calcium magnesium carbonate,
5 to 15 parts of zinc oxide,
5 to 25 parts of magnesium-aluminium hydroxycarbonate,
20 to 95 parts of resin package blend,
2 to 10 parts of N-(1.3-dimethylbutyl)-N'-phenyl-p-phenylendiamine,
5 to 15 parts of triallyl cyanurate, and
0.5 to 5 parts of a vulcanizing agent.

2. Multilayered tube or hose (1, 10) according to claim 1, **characterised in that** the said parts are parts by weight or parts by volume.

3. Multilayered tube or hose (1, 10) according to claim 1 or 2, **characterised in that** the acrylonitrile butadiene rubber comprises 18 to 28 weight-% acrylonitrile and/or **in that** the styrene butadiene rubber comprises 10 to 25 weight-% of styrene, wherein the butadiene fraction is preferably composed of 60 to 70 weight-% trans-1,4 configuration, 15 to 20 weight-% cis-1,4 configuration, balancing 1,2 configuration, in particular per 100 parts of the elastomer comprising acrylonitrile butadiene rubber and styrene butadiene rubber.

4. Multilayered tube or hose (1, 10) according to any of the preceding claims, **characterised in that** the ethylene propylene diene monomer comprises 44 to 85 weight-% of ethylene and 2.8 to 11 weight-% ethylidene norbornene, in particular per 100 parts of the elastomer comprising acrylonitrile butadiene rubber and styrene butadiene rubber.

5. Multilayered tube or hose (1, 10) according to any of the preceding claims, **characterised in that** the resin package blend comprises 5 to 25 parts hexa (methoxymethyl) melamine liquid resin; 5 to 15 parts of self-curing modified phenolic resin ingredient; 5 to 25 parts of aliphatic-aromatic soft resin; 5 to 25 parts of benzene-1,3-diol bonding agent; 5 to 25 parts of aromatic hydrocarbon resin ingredient, in particular per 100 parts of elastomer comprising acrylonitrile butadiene rubber and styrene butadiene rubber.

6. Multilayered tube or hose (1, 10) according to any of the preceding claims, **characterised in that** the vulcanizing agent comprises dicumyl peroxide.

7. Multilayered tube or hose (1, 10) according to any of the preceding claims, **characterised in that** said abrasion resistant sheath (12) comprises a thermoplastic polyurethane material.

8. Multilayered tube or hose (1, 10) according to any of the preceding claims, **characterised in that** said abrasion resistance sheath (12) forms of the innermost layer of the multilayered tube or hose (1, 10).

9. Multilayered tube or hose according (1, 10) to any of the preceding claims, **characterised in that** said at least one force bearing sheath (2) comprises acrylonitrile butadiene rubber, styrene butadiene rubber and/or ethylene propylene diene monomer.

10. Multilayered tube or hose according (1, 10) to any of the preceding claims, **characterised by** at least a low flammable layer (8), in particular a low flammable sheath (8) or coating, said low flammable layer (8) preferably comprising nitrile rubber and/or poly vinyl chloride.

11. Multilayered tube or hose (1, 10) according to any of the preceding claims, **characterised by** at least a strength reinforcing means (7), in particular a strength reinforcing fabrics (7), more preferably a crimped or non-crimped fabrics.

12. Multilayered tube or hose (1, 10) according to any of the preceding claims, **characterised by** at least diffusion reducing sheath (4), that is in particular embedded between two different sheaths (2, 6), in particular between two force bearing sheaths (2, 6).

13. Multilayered tube or hose (1, 10) according to claim 12, **characterised by** at least a second type of adhesion promoting sheath (3, 5) between said diffusion reducing sheath (4) and the at least one neighbouring sheath (2, 6), preferably the at least one neighbouring force bearing sheath (2, 6).

14. Multilayered tube or hose (1, 10) according to claim 13, **characterised in that** said second type of adhesion promoting sheath (2, 6) comprises a mixture of:
65 to 85 parts of acrylonitrile butadiene rubber,
15 to 35 parts of styrene butadiene rubber,
75 to 125 parts of carbon black N990,
30 to 100 parts of calcium magnesium carbonate,
5 to 15 parts of zinc oxide,
5 to 20 parts of magnesium-aluminium hydroxycarbonate,
25 to 125 parts of resin package blend,
2 to 10 parts of N-(1.3-Dimethylbutyl)-N'-phenyl-p-phenylendiamine,
5 to 15 parts of Triallyl cyanurate, and
0.5 to 5 parts of a vulcanizing agent.

## Amended claims

### Amended claims in accordance with Rule 137(2) EPC.

1. Multilayered tube or hose (1, 10) comprising a plurality of coaxially arranged sheaths (2, 3, 4, 5, 6, 7, 8, 12, 13), wherein the coaxially arranged sheaths (2, 3, 4, 5, 6, 7, 8, 12, 13) are bonded together, the multilayered tube or hose (1, 10) comprising at least:
a force bearing sheath (2),
an abrasion resistant sheath (12), and
an adhesion promoting layer (13) that is arranged between the force bearing sheath (2) and the abrasion resistant sheath (12) and that increases the bonding force between said force bearing sheath (2) and
said abrasion resistant sheath (12),
wherein said adhesion promoting layer (13) comprises a mixture of: 55 to 85 parts by weight of acrylonitrile butadiene rubber,
5 to 25 parts by weight of styrene butadiene rubber,
5 to 25 parts by weight of ethylene propylene diene monomer
75 to 125 parts by weight of carbon black N990,
5 to 15 parts by weight of zinc oxide,
2 to 10 parts by weight of N-(1.3-dimethylbutyl)-N'-phenyl-p-phenylendiamine,
0.5 to 5 parts by weight of a vulcanizing agent, and
20 to 95 parts by weight of resin package blend, the resin package blend comprising 5 to 25 parts by weight of hexa (methoxymethyl) melamine liquid resin; 5 to 15 parts by weight of self-curing modified phenolic resin ingredient; 5 to 25 parts by weight of aliphatic-aromatic soft resin; 5 to 25 parts by weight of benzene-1,3-diol bonding agent; and 5 to 25 parts by weight of aromatic hydrocarbon resin ingredient per 100 parts by weight of elastomer comprising acrylonitrile butadiene rubber and styrene butadiene rubber,
**characterised by**:
5 to 15 parts by weight of triallyl cyanurate,
30 to 90 parts by weight of calcium magnesium carbonate, and
5 to 25 parts by weight of magnesium-aluminium hydroxycarbonate.

2. Multilayered tube or hose (1, 10) according to claim 1, **characterised in that** the acrylonitrile butadiene rubber comprises 18 to 28 weight-% acrylonitrile and/or **in that** the styrene butadiene rubber comprises 10 to 25 weight-% of styrene, wherein the butadiene fraction is preferably composed of 60 to 70 weight-% trans-1,4 configuration, 15 to 20 weight-% cis-1,4 configuration, balancing 1,2 configuration, in particular per 100 parts of the elastomer comprising acrylonitrile butadiene rubber and styrene butadiene rubber.

3. Multilayered tube or hose (1, 10) according to claim 1 or 2, **characterised in that** the ethylene propylene diene monomer comprises 44 to 85 weight-% of ethylene and 2.8 to 11 weight-% ethylidene norbornene, in particular per 100 parts of the elastomer comprising acrylonitrile butadiene rubber and styrene butadiene rubber.

4. Multilayered tube or hose (1, 10) according to any of the preceding claims, **characterised in that** the vulcanizing agent comprises dicumyl peroxide.

5. Multilayered tube or hose (1, 10) according to any of the preceding claims, **characterised in that** said abrasion resistant sheath (12) comprises a thermoplastic polyurethane material.

6. Multilayered tube or hose (1, 10) according to any of the preceding claims, **characterised in that** said abrasion resistance sheath (12) forms of the innermost layer of the multilayered tube or hose (1, 10).

7. Multilayered tube or hose according (1, 10) to any of the preceding claims, **characterised in that** said at least one force bearing sheath (2) comprises acrylonitrile butadiene rubber, styrene butadiene rubber and/or ethylene propylene diene monomer.

8. Multilayered tube or hose according (1, 10) to any of the preceding claims, **characterised by** at least a low flammable layer (8), in particular a low flammable sheath (8) or coating, said low flammable layer (8) preferably comprising nitrile rubber and/or poly vinyl chloride.

9. Multilayered tube or hose (1, 10) according to any of the preceding claims, **characterised by** at least a strength reinforcing means (7), in particular a strength reinforcing fabrics (7), more preferably a crimped or non-crimped fabrics.

10. Multilayered tube or hose (1, 10) according to any of the preceding claims, **characterised by** at least diffusion reducing sheath (4), that is in particular embedded between two different sheaths (2, 6), in particular between two force bearing sheaths (2, 6).

11. Multilayered tube or hose (1, 10) according to claim 10, **characterised by** at least a second type of adhesion promoting sheath (3, 5) between said diffusion reducing sheath (4) and the at least one neighbouring sheath (2, 6), preferably the at least one neighbouring force bearing sheath (2, 6).

12. Multilayered tube or hose (1, 10) according to claim 11, **characterised in that** said second type of adhesion promoting sheath (2, 6) comprises a mixture of:
65 to 85 parts by weight of acrylonitrile butadiene rubber,
15 to 35 parts by weight of styrene butadiene rubber,
75 to 125 parts by weight of carbon black N990,
30 to 100 parts by weight of calcium magnesium carbonate,
5 to 15 parts by weight of zinc oxide,
5 to 20 parts by weight of magnesium-aluminium hydroxycarbonate,
2 to 10 parts by weight of N-(1.3-Dimethylbutyl)-N'-phenyl-p-phenylendiamine,
5 to 15 parts by weight of Triallyl cyanurate,
0.5 to 5 parts by weight of a vulcanizing agent, and
20 to 95 parts by weight of resin package blend, the resin package blend comprising 5 to 25 parts by weight of hexa (methoxymethyl) melamine liquid resin; 5 to 15 parts by weight of self-curing modified phenolic resin ingredient; 5 to 25 parts by weight of aliphatic-aromatic soft resin; 5 to 25 parts by weight of benzene-1,3-diol bonding agent; and 5 to 25 parts by weight of aromatic hydrocarbon resin ingredient per 100 parts by weight of elastomer comprising acrylonitrile butadiene rubber and styrene butadiene rubber.
